# EUROPEAN PATENT APPLICATION

(11) **EP 4 764 647 A1**
(43) Date of publication of application: **24.06.2026**
(21) Application number: 24222368.3
(22) Date of filing: 20.12.2024
(51) Int. Cl.: G02B 21/26, G01N 29/00, H02K 41/02

(54) **DEVICE AND METHOD FOR PATTERNING PARTICLES**

(71) Applicant: AO Technology AG, 7000 Chur (CH)
(72) Inventor: Rohrbach, Gaetan, 2502 Biel/Bienne (CH); Scheidegger, Andreas, 3032 Hinterkappelen (CH); Thurner, Marc, 2075 Wavre (CH)
(74) Representative: P&TS SA (AG, Ltd.)

(57) **Abstract**

The invention concerns a pattern generating device (100) comprising a movable assembly with a holding means adapted to hold a sample receptacle, and one or more coil (13), and a stationary assembly with one or more ferromagnetic component (14), each ferromagnetic component (14) comprising a cylindrical magnet member (14a) being at least partially placed inside one of the one or more coil (13). Each set of a coil (13) and ferromagnetic component (14) is a component of an electromagnetic Z actuator (10, 10a, 10b, 10c). The one or more electromagnetic Z actuator (10, 10a, 10b, 10c) is configured to (i) actuate a translational displacement of the movable assembly from a first to a second stable position and vice versa in Z direction relative to the stationary assembly and (ii) to induce a vibration of a sample receptacle (500, 600) held by the holding means. The invention further concerns a method for patterning particles in a liquid or gel-like sample using the device.

## Description

### Technical domain

The present invention concerns a device for generating wave-induced patterns of particles contained in a liquid or gel-like sample, in particular a native of modified biological sample such as a blood sample, a synthetic sample, or an artificial biological sample.

### Related art

By utilizing acoustic waves, particles suspended in a fluid medium can be precisely organized into desired configurations. This technique leverages the principles of acoustofluidics, where sound waves propagate through the medium, exerting forces on the particles to form intricate patterns. Such an approach offers significant advantages in various fields, including material science, biomedical engineering, and manufacturing, where the controlled arrangement of micro- and nano-particles is crucial.

WO2021074796 for example discloses a patterning device for preparing three-dimensional structures using sound vibrations. A matrix comprising particles which are free to migrate in said matrix is exposed to sound vibrations. Upon exposure to the vibrations the particles migrate and arrange themselves according to the pattern of the sound waves applied to the matrix.

The patterning process described therein exploits Faraday waves, which are standing wave patterns that emerge on the surface of a fluid under vibrational excitation. When the liquid or gel-like matrix is subjected to vertical oscillations at specific frequencies, these Faraday waves form periodic patterns on the surface, reflecting the underlying symmetry and properties of the oscillation.

Particles within the matrix respond to these vibrational wave-induced forces, migrating to the nodes or antinodes of the standing waves depending on their size, density, and other physical properties. This phenomenon enables the creation of highly organized and repeatable particle arrangements that are dictated by the characteristics of the Faraday waves.

The generation of nodes and antinodes in the wave pattern requires a stable and uniform height of the liquid layer as well as a vibration of the layer in Z direction, i.e. perpendicular to its surface, only. Leveling of the liquid or gel layer is therefore crucial for a reliable and reproducible wave-induced patterning.

While advances have been made with respect to patterning of biological material using the above-mentioned methods, there is still a need to better integrate the wave-induced patterning process with other work processes, such as microscopy, or incubation in environmental controlled chambers. Today, both processes are performed as separate steps, as present devices do not allow for microscopic observation of the sample in real time during the patterning process.

There is therefore a need to find an equipment which is allows for better integration of the wave-induced patterning process with other processes, in particular microscopy.

### Short disclosure of the invention

It is an aim of the present invention to provide a pattern generating device that overcomes the shortcomings and limitations of the state of the art.

It is a further aim of the present invention to provide a pattern generating device that allows for microscopic observation of a sample during the patterning process.

It is a further aim of the present invention to improve the reproducibility of patterning results for particles provided in a liquid or gel-like medium.

According to the invention, one or more of these aims are achieved by the object of the attached claims, and especially by its independent claims. Further preferred embodiments are provided in the dependent claims.

In particular, one or more of the above-stated aims are achieved by a pattern generating device comprising one or more electromagnetic Z actuator, a movable assembly and a stationary assembly. Each component of the one or more electromagnetic Z actuator forms part of either the movable assembly or the stationary assembly of the pattern generating device. The electromagnetic Z actuator has a cylindrical coil and a ferromagnetic component comprising a cylindrical magnet member, said cylindrical magnet member being at least partially placed inside the coil.

The movable assembly comprises one or more coil, for example a voice coil or a solenoid coil, of the one or more electromagnetic Z actuator and a holding means adapted to hold a sample receptacle.

The stationary assembly comprises one or more ferromagnetic components of the one or more electromagnetic Z actuator. The stationary assembly may further comprise a support member onto which the ferromagnetic component is fixed.

The one or more electromagnetic Z actuator is configured to actuate a translational displacement of the movable assembly relative to the stationary assembly from a first to a second stable position and vice versa.

The one or more electromagnetic Z actuator is further configured to induce the vibration of a sample receptacle held by the holding means, thereby inducing the formation of a wave in a liquid or gel-like sample medium contained in said receptacle.

The patterning device is thus adapted for distributing particles, for example biological cells, contained in a liquid or gel-like medium according to a wave pattern induced in said medium. Particle sizes may vary from nanometers to low millimeters. The maximum transverse dimension of particles supplied for patterning is less than 10 mm, and preferably less than 5 mm.

When positioned on an external support which is flat and perpendicular to gravity, the Z axis of the movable assembly of the device is in alignment with the force of gravity. In this position the term "upwards" as used herein means along the Z axis in opposite direction of the force of gravity, wherein the term "downwards" defines the along the Z axis in direction of the force of gravity. When the movable assembly is tilted the "upwards" and "downwards" directions tilt with the Z axis. The terms "up" and "down", "upper" and "lower" are defined in analogy, using the Z axis as a reference.

In the operational position of the pattern generating device the stationary assembly rests on an external support and the movable assembly is arranged for receiving a sample receptacle containing a liquid or gel-like sample. The movable assembly is thus facing upwardly in the operational position, while the lower end of the stationary assembly is positioned on the external support.

In one embodiment of this invention the pattern generating device serves as a microscope stage, in particular a Z microscope stage or it is comprised in microscope stage. In this embodiment the pattern generating device is dimensioned accordingly to fit the required dimensions of the microscope.

A microscope stage is a platform that holds and moves a sample in x, y, and/or z motion, enabling precise positioning and observation under a microscope. The pattern generating device of this invention is adapted to serve as a Z microscope stage. It may be further adapted for motion in x and y direction, by providing additional components, such as guiding means which enable a guided motion of the device or the sample holder of the device in x and/or y directions. The pattern generating device of this invention may also be combined with or integrated in a microscope stage in which it actuates positioning of the sample receptacle.

The holding means of the movable assembly is dimensioned to accommodate a sample receptacle. The sample receptacle may be provided with one or more sample chambers for receiving and containing a liquid or gel-like sample. The one or more sample chambers may for example be of a substantially conical shape. Each sample chamber has a lateral wall and a flat base which together define a space for receiving and containing the sample. The chamber may be filled through an aperture opposite the flat base. It may be provided with a removable lid.

The sample receptacle may be a standard sized consumable used for cell culture in biomedical laboratories, such as a Petri dish or a multi-well cell culture plate.

The actuator of the pattern generating device is an electromagnetic Z actuator. It is preferably a linear motor. It may be a voice coil motor, a solenoid motor, such as a linear solenoid motor, or a vibration-motor.

A voice coil motor, which is a non-commutated DC linear actuator, is particularly suited as a Z actuator, since can actuate linear displacements in excess of 10cm and can move bi-directionally. It can thus actuate and control an upwards as well as a downwards motion of the movable assembly in Z direction. Moreover, if has a constant force over the stroke and can be used for closed loop position and force applications.

The electromagnetic Z actuator comprises a cylindrical coil which may be a solenoid coil or a voice coil. When an electric current passes through the coil, a magnetic field is generated which drives the linear motion of the cylindrical magnet member of the ferromagnetic component. The cylindrical magnet member is a permanent magnet which is at least partially accommodated inside the coil. The magnet and the coil are independent from each other. When a current is applied in the coil, the coil generates a force in Z direction moving it against the fixed cylindrical magnet member.

The ferromagnetic component may further comprise a hollow cylinder, in which the coil and the cylindrical magnet member are housed. The cylindrical magnet member placed inside the coil and the hollow cylinder may be directly connected. They may be formed as an integral ferromagnetic component.

Alternatively, the hollow cylinder and the cylindrical magnet member may be separate pieces, which are indirectly connected to form the ferromagnetic component. The cylindrical magnetic member and the hollow cylinder for example both be fixed on the support structure of the stationary assembly.

The inner surface of the hollow cylinder and the outer surface of the preferably cylindrical magnet member together define a gap G in which the windings of the coil are placed.

The electromagnetic Z actuatorof the pattern generating device of this invention is configured to cause vibration of the flat base of the one or more sample chambers when provided with an appropriate AC signal. Upon reaching a certain frequency and acceleration the vibrating base plate thus induces the formation of waves, preferably of standing waves, in the fluid or gel-like medium contained in the sample chamber.

The AC signal is preferably a sinusoidal signal.

The displacement in Z direction of at least a portion of the movable assembly in relation to the stationary assembly may be obtained by modifying the voltage or current driving the electromagnetic Z actuator.

A constant DC bias voltage may be applied to the electromagnetic Z actuator to maintain the movable assembly or the portion of the movable assembly actuated by the electromagnetic Z actuator in a stable first position in relation to the stationary assembly. When the constant voltage applied to the electromagnetic Z actuator is altered, the movable assembly or the portion of the movable assembly activated by the electromagnetic Z actuator is displaced accordingly along the Z axis. An increase in voltage leads to an upward displacement, while a decrease in voltage causes the downward motion of the movable assembly or a portion thereof.

The electromagnetic Z actuator directly converts the electrical signal applied to its coil into a linear motion. This direct conversion simplifies the design, reduces mechanical wear and tear, and thus reduces maintenance requirements and increases the device's overall reliability.

The electromagnetic Z actuator of this invention is particularly suited to actuate the displacement of the movable assembly along the Z axis of the device as well as a vibration initiator, as its translational movement can be precisely controlled by applying a defined voltage to the coil of the electromagnetic Z actuator. Since the electromagnetic Z actuator of this invention is highly responsive to changes of voltage and electrical signals thus enabling a precise control of the vibrational motion of the movable assembly.

The amplitude and frequency of the AC voltage passing through the coil can be readily adapted to achieve a desired strength and frequency of vibrational motion. The vibrational motion of the movable assembly is transmitted to the sample receptacle held thereon, such that the receptacle, including its flat base, vibrates with the movable assembly, thereby inducing wave formation in the liquid or gel-like sample contained in the receptacle. A defined wave pattern of the sample medium can thus be achieved by regulating the parameters of the AC current passing through the coil of the pattern generating device.

For the purpose of patterning micro- and nano- particles in a liquid or gel-like medium, a frequency ranging from 20 Hz to 20 kHz, or 20Hz to 1kHz, or 50Hz to 2kHz, or 10kHz to 15kHz may be chosen. These frequencies are suited for patterning of biological particles, in particular cells or cell clusters.

The frequency of the AC signal defines the oscillation frequency of the coil, and thereby the entire movable assembly and a sample receptacle retained by the movable assembly. The amplitude of the AC signal may be chosen according to the specific embodiment of the pattern generating device and to the parameters and material composition sample receptacle. The amplitude should be chosen to achieve impacts of sufficient strength to cause the wave formation in the liquid or gel-like medium contained in the sample receptacle. The acceleration peak generated by the coil may be up to 100 m/s².

In one embodiment the pattern generation device may comprise a plurality of electromagnetic Z actuators, each electromagnetic Z actuator being operatively linked to a portion of the movable assembly. In this embodiment, the movable assembly and/ or the holding means for holding a sample receptacle are preferably arranged to have three rotational freedoms in respect to the stationary assembly.

In this embodiment the coordinated adjustment along the Z axis by the individual electromagnetic Z actuators serves to adjust not only the position of the movable assembly along its Z axis, but it can also control and adjust the spatial orientation of the movable assembly with the holding means or the holding means directly. By lifting or lowering certain distinct portions of the movable assembly or the of holding means, the plurality of electromagnetic Z actuators control its spatial orientation. In other words, the electromagnetic Z actuators are not only arranged to move the movable assembly upwards and downwards along the Z axis, but they may also be configured cause the movable assembly with the holding means, or only holding means to tilt. By controlling the tilt of the holding means, the spatial orientation of the sample receptacle can be adjusted. This is particularly useful, when the flat base of the sample chamber is not perpendicular to the direction of gravity. Insufficient stability and tilting in relation to the gravitational force may result in a difference in depth of the sample medium over an area and can therefore lead to irregular or non-reproducible patterns.

The electromagnetic Z actuators therefore provide for a levelling mechanism which corrects the tilt of the holding means such that the flat base of the one or more sample chambers remains perpendicular to the direction of gravity, even if the stationary assembly is tilted. As a result of this levelling adjustment in respect of the gravitational force, the depth of the liquid or gel-like medium provided in the one or more chambers of the receptacle each have a uniform depths or thickness over the flat base. This in turn enables a better reproducibility of the patterning results, as the wave pattern is not adversely affected by different depths of the liquid or gel-like medium over a surface area defined by the flat base of the chamber.

In one embodiment the levelling adjustment is performed in real time, compensating for undesirable tilting and/or shaking of the stationary assembly of the device. The real time adjustment can be performed on the basis of a sensor signal received by a processor or controller which regulates the voltage and/or electrical signal applied to the electromagnetic Z actuator through the electrical wires 80.

The levelling adjustment driven by the at least two or at least three electromagnetic Z actuators may be fully automated.

A motion sensor, for example a gyroscopic sensor, configured to determine the spatial orientation of the stationary assembly and/or the movable assembly in relation to the force of gravity may provide the sensor signal for the control of the levelling adjustment of the mobile phase. The motion sensor may be integrated in the pattern generating device.

In one embodiment of this invention at least two, or at least three individual electromagnetic Z actuators drive the motion of the entire movable assembly in z-direction of the pattern generating device and/or for adjusting the spatial orientation of the movable assembly. In this embodiment each of the electromagnetic Z actuators drives the displacement of a different portion of the movable assembly.

The at least two electromagnetic Z actuators are preferably arranged in distinct peripheral portions of the pattern generating device, wherein the holding means is arranged in the central axis of the pattern generating device. The at least two electromagnetic Z actuators are preferably evenly spaced. They may be arranged in a circle, or in a square, or in another shape. The least three electromagnetic Z actuators are preferably configured to adjust the spatial orientation of the mobile assembly in relation to the stationary assembly.

In a preferred embodiment three electromagnetic Z actuators are arranged evenly spaced in a circle such that each of the motors contacts a portion of the movable assembly to drive a displacement upon a change in voltage. The electromagnetic Z actuators are preferably positioned at an equal distance from the centre of the movable assembly. The three electromagnetic Z actuators may thus be positioned in a circle at 120° angles. This arrangement is very simple but extremely effective for levelling adjustments, which are readily controlled by altering the voltage applied to one or more of the three electromagnetic Z actuators.

In one embodiment at least two electromagnetic Z actuators are arranged in peripheral portions of the device around a central portion, wherein the central portion is configured to permit incident light to pass through the device. The central portion of the device thus provides for an optical path. In this embodiment at least a central portion of the movable assembly is transparent or translucent such as to allow incident light to pass through the central portion of the movable assembly. Alternatively, the central portion of the movable assembly may comprise an aperture instead of the transparent or translucent portion. A through hole may for example extent along the longitudinal central axis through the entire device.

This embodiment is particularly suited for observation of the sample in a microscope relying on a passage of light through a sample. It may for example be accommodated or be integrated in a brightfield microscope, whereby a sample receptacle with a transparent or translucent base is arranged in the optical path of the microscope to allow the light to pass through the sample.

The pattern generating device of this invention is however not limited to this type of microscope. It may also be used with a microscope using illumination from the top, without the need for an optical path through the receptacle.

The pattern generating device may for example be used as or integrated in a microscope stage for brightfield microscopy, darkfield microscopy, phase contrast microscopy, polarized microscopy, or fluorescence microscopy.

The patterning of the particles contained in the sample is then driven by the electromagnetic Z actuators which may be arranged around the optical path. The electromagnetic Z actuators generate vibration which induce standing waves in the sample liquid or gel. The particles contained in the sample are guided to positions corresponding to the standing wave pattern. This process can be observed in real time through the microscope.

Since the electromagnetic Z actuators actuate displacement of the moveable assembly in Z direction, the depth of the sample receptacle can be adjusted during operation such that microscope's focal point can move through the depth of the sample contained in the receptacle. This capability allows for focusing on different levels or layers throughout the depths of the sample. The vibration of the sample receptacle or its base may be adjusted such as to provide standing waves, thereby avoiding significant or irregular movement of the sample medium that could interfere with microscopic observation.

In an alternative embodiment, the pattern generating device comprises one electromagnetic Z actuator which is arranged in the central longitudinal axis of the device.

The electromagnetic Z actuator is configured to drive the displacement of the movable assembly along the Z axis of the device and to induce vibrations in a sample receptacle accommodated in the holding means of the movable assembly.

To adjust the spatial orientation of the movable assembly, respectively the sample receptacle retained by the movable assembly, the pattern generating device may further comprise a gyroscope. The gyroscope is configured to measure and maintain the spatial orientation of the movable assembly. The gyroscope is furthermore adapted to adjust the spatial orientation of the movable assembly if required.

The pattern generating device may comprise a controller configured to control the Z actuation of the one or more electromagnetic Z actuators using a DC bias voltage. The controller may be adapted to regulate the voltage applied to the electromagnetic Z actuators, thereby regulating the displacement of the movable component of the coil in Z direction.

The controller may furthermore be configured to regulate the vibration of a sample receptacle held by the holding means using an AC signal to drive the electromagnetic Z actuators, or each of the plurality of electromagnetic Z actuators.

If the controller controls a plurality of electromagnetic Z actuators, the AC signals applied to drive each of the motors in a synchronised manner such that said electromagnetic Z actuators jointly induce a defined vibration of the sample receptacle. In other words, the frequency, phase and amplitude of the sinusoidal electrical signal which are applied to drive each of the motors are matched.

In an embodiment comprising a plurality of electromagnetic Z actuators, the controller is therefore configured to control and synchronise the oscillation of the plurality of electromagnetic Z actuators, such that the electromagnetic Z actuators jointly induce a defined vibration of a sample receptacle held by the holding means.

The invention also concerns a method for patterning particles in a liquid or gel-like sample. The method is performed using a pattern generating device as described above. A sample receptacle having at least one chamber with a flat basis is accommodated in the holding means of the pattern generating device. The at least one chamber is provided with a liquid or gel-like sample containing particles.

A DC bias voltage is applied to drive at least one of the one or more electromagnetic Z actuators of the pattern generating device, thereby actuating a translational displacement of at least a portion of the movable assembly from a first to a second stable position in Z direction relative to the stationary assembly.

An AC signal is applied cause the one or more electromagnetic Z actuators to induce vibration of the liquid or gel-like sample, which is contained in the sample receptacle, thereby inducing a wave pattern in the sample and causing the particles contained therein to migrate and take a position according to said wave pattern.

One of the primary challenges addressed by the device and method of invention is the precise control of particle patterning in conjunction with the accurate positioning and the substantially uniform depth of the liquid or gel-like sample during the patterning process. The solution presented by this invention enables for this precise and robust control of the position of the sample and thus allows for microscopic observation of the sample liquid or gel during the patterning process induced by the stable wave pattern of the sample medium.

The pattern generating device is thus adapted to be accommodated or integrated in a microscope, thus allowing for real-time observation and analysis of the particles during the patterning process.

By integrating advanced techniques for adjusting the position and spatial orientation, the present invention not only ensures that the liquid or gel-like sample medium remains stable and uniformly responsive to the vibrational waves but also facilitates better patterning results.

This pattern generating devices presented herein thus enhances the utility and versatility of the vibration induced patterning technology, making it suitable for other applications that demand precision, stability, and compatibility with ancillary techniques.

The term "pattern" as used herein denotes a non-homogenous arrangement of the particles under the influence of vibrational waves. In particular, the pattern may reflect the shape of the waves within the matrix, defined by the concentration of the particles in the matrix. The pattern thus defines gradient concentrations having local maxima and minima. In other word the "pattern" object of the present disclosure excludes any homogenous spread of the particles. It can relate to a geometrical arrangement, comprising periodical or regular variation of concentration. Alternatively, the pattern can relate to non-geometrical arrangements.

The term "particles" denote any particles which can be suspended in a liquid or gel-like medium and are able to migrate under exposure to vibrational waves. More particularly, the particles can be of organic, inorganic or metallic type. Organic particles include any organic compound or group of compounds such as organic oligomers or organic polymers, fatty acids, liposomes, and encapsulated organic compounds. Organic particles also includes potential active molecules such as drugs or combination of drugs. Organic particles also refers to biological particles, in the sense of living material, such as cells, cell agglomerates, tissue fragments, organoids, spheroids, bacteria, microsomes, and components of living material such as proteins, microparticles loaded with proteins or signalling molecules, as well as any peptide, polypeptide, nucleic acid oligomers and nutritive elements for biological cells. The biological cells can be of any type, including osteoblasts, fibroblasts, keratinocytes, human mesenchymal stem cells, chondrocytes, or human umbilical vein endothelial cells, or a mixture thereof. It is to be understood that particles can include mixtures of organic component, inorganic components, metallic components and living material.

The liquid or gel-like medium denotes a medium which is adapted for suspending particles. It may be hydrogel, paste, fluid or any other material. The medium may comprise components or mixtures of components adapted for modifying the physical properties of the medium, at least adapted for increasing the viscosity to prevent the migration of the particles in the matrix once it has been modified. The viscosity may for example increased during or as a subsequent step to the patterning process. The change of physical properties may be a solidification of the medium. The particles should however be allowed to migrate and arrange in a pattern according to vibrational waves prior to the solidification of the medium.

The singular "a", "an" and "the" include the plural equivalents unless the context distinctly indicates otherwise.

The terms "comprises" and "contains" denote "includes" in a non-limiting sense.

The terms "e.g.", "for example" and "such as" as used herein denote specific non-limiting examples that fall under a more general category.

### Short description of the drawings

Exemplar embodiments of the invention are disclosed in the description and illustrated by the drawings in which:

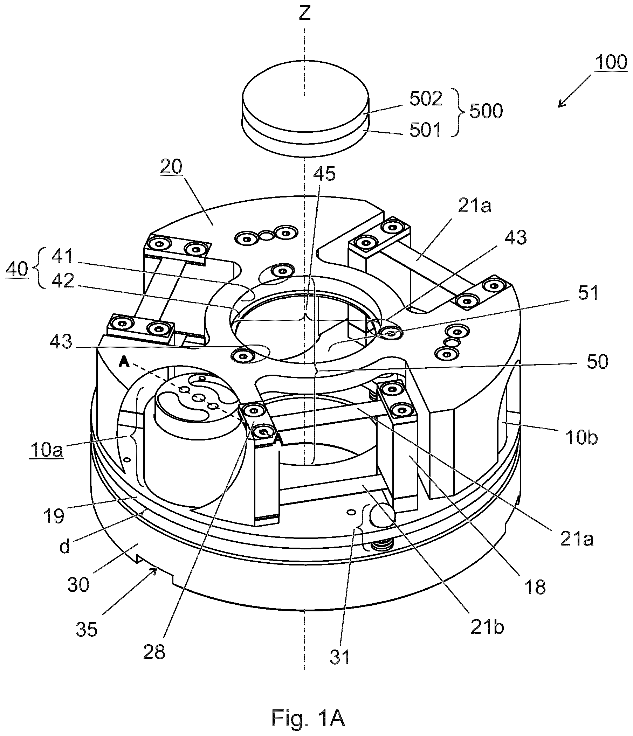

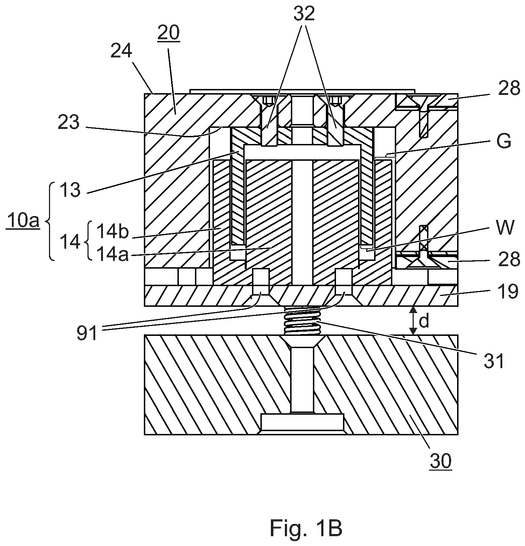

**Figures 1A** **and** **1B** illustrates schematically a first embodiment of a pattern generating device of this invention comprising three voice coil motors arranged around a central passage, wherein
**Figure 1A** shows a perspective view of the device with a portion of the cover member shaped to house the voice coil motor shown on the left side of the device being partially transparent so the voice coil motor becomes visible,
**Figure 1B** shows an A-A section of the device shown in Figure 1A
**Figures 2A to 2C** illustrates schematically a second embodiment of a pattern generating device of this invention comprising one centrally positioned voice coil motor, wherein

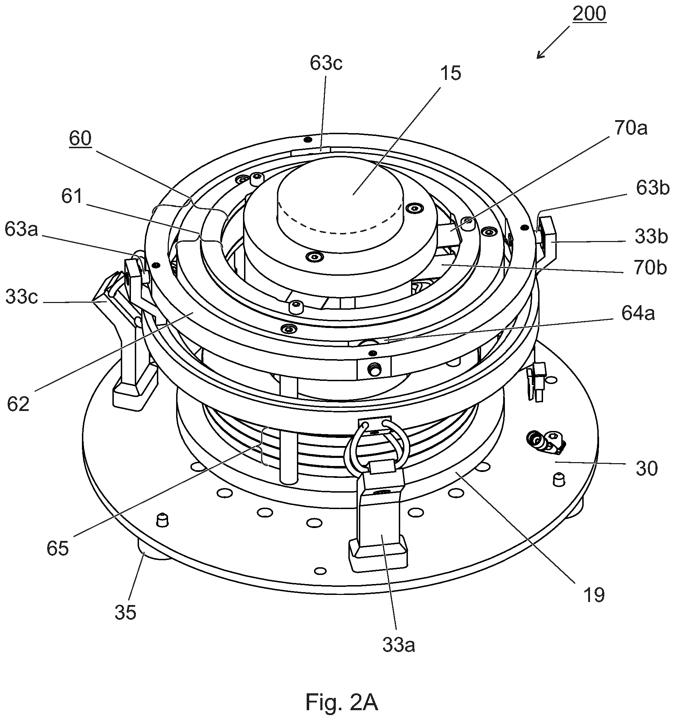

**Figure 2A** shows a perspective view of the second embodiment of the pattern generating device without a casing,

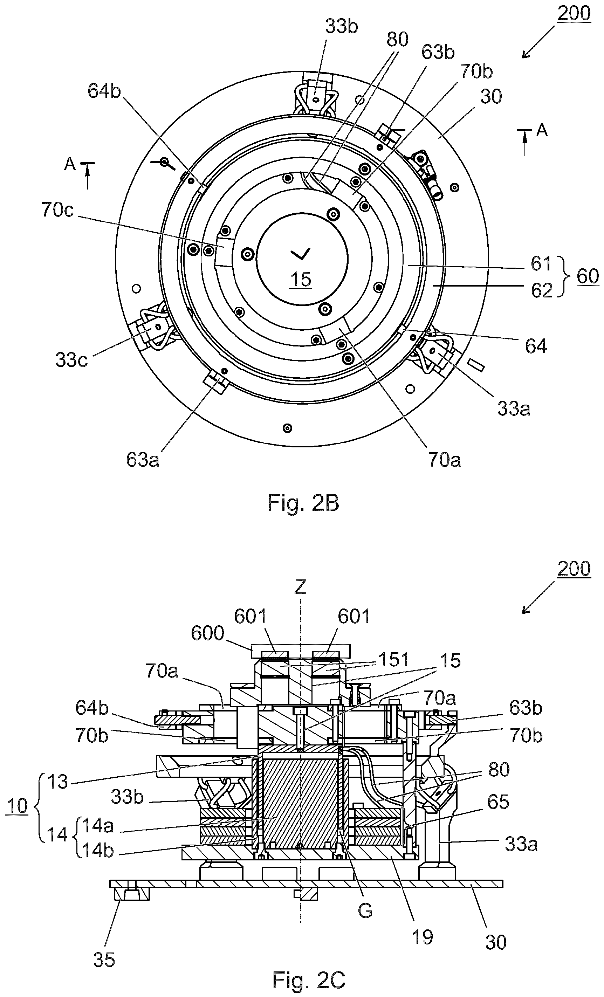

**Figure 2B** shows a top view of the pattern generating device of Figure 2A,
**Figure 2C** shows an A-A cross section through the device shown in Figure 2B, and

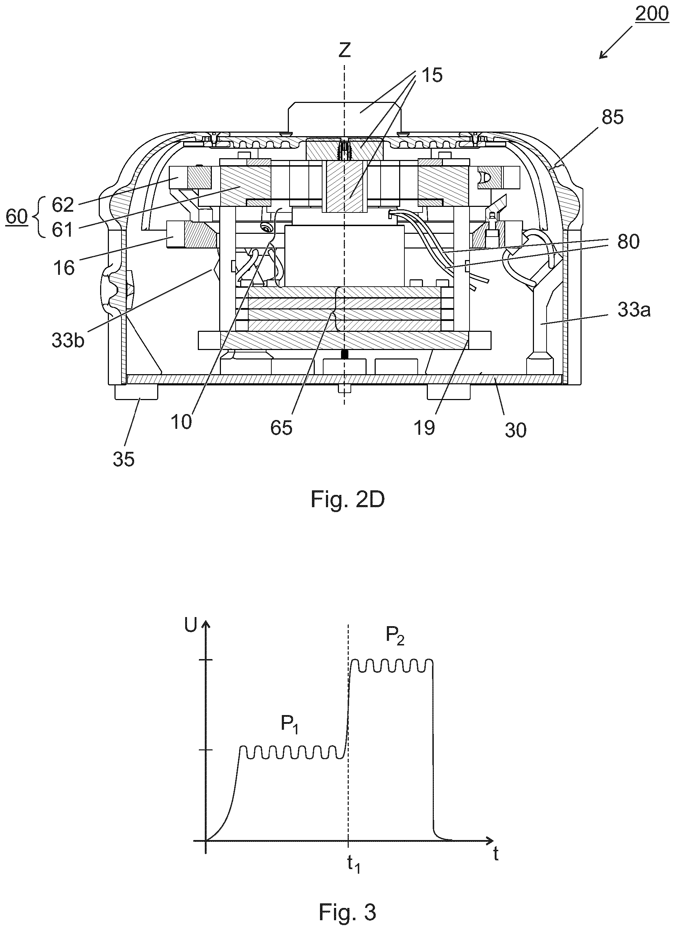

**Figure 2D** shows a B-B cross section of the second embodiment shown in Figure 2B with a casing.
**Figure 3** is an illustrative example of a voltage applied to the voice coil motor for Z actuation during the vibration induced patterning process.

### Examples of embodiments of the present invention

Two possible embodiments of the present invention are illustrated in the Figures. The electromagnetic Z actuators of the embodiments shown in the Figures are voice coil motors 10, 10a,10b, 10c. The invention is however not limited to voice coil motors. Other electromagnetic Z actuators comprising a cylindrical coil 13 and a ferromagnetic component 14 with a cylindrical magnet member 14a which is at least partially housed inside the cylindrical coil 13 and a housing 14b are also suitable as motors for these embodiments. The voice coil motor(s) 10, 10a, 10b, 10c referred to in the following sections may therefore be replaced by the more general term of electromagnetic Z actuator.

Figures 1A and 1B show a first embodiment of the pattern generating device 100 in which three voice coil motors 10a, 10b, 10c are arranged around a central portion 50 of the pattern generating device.

As illustrated in Figure 1A, the device may have an overall conical shape, with the three voice coil motors being arranged regularly spaced in a circle around the central longitudinal axis of the device.

The pattern generating device comprises a stationary assembly including the the stationary ferromagnetic components 14 of the voice coil motors 10, 10a,10b, 10c, and a support member 19. These stationary components 14 of the voice coil motors are fixedly connected to the support member 19. The voice coil motors further comprises at least one movable component, including the cylindrical coil 13 (Figure 1B). The coil 13 forms part of a movable assembly of the pattern generating device 100 which is connected to the stationary assembly in such a way that the two assemblies can perform a relative motion to each other. The relative motion is actuated by the voice coil motor, specifically by the relative motion between the stationary ferromagnetic component 14 of the voice coil motor and its coil 13.

The coils 13 of the voice coil motors 10a, 10b, 10c are fixedly attached to the movable cover member 20 through attachment means 32.

The term "attachment means" as used herein denotes means which are adapted to join two or more components without permitting relative motion between these components. Attachment means may for example be screws, other mechanical means such as clamping members, adhesives, or other suitable means to provide a fixed attachment.

The cylindrical coil 13 and the movably cover member 20 thus perform their motion together. In the embodiment shown, the voice coil motors 10a, 10b, 10c are arranged underneath the cover member 20 when the pattern generating device 100 is in operational position, residing on an external support. The coils 13 of the three motors are thus each affixed to the bottom surface 23 of the cover member 20, which faces the support on which the device resides when in operation.

The movable cover member 20 comprises a holding means 40 which is adapted to receive and temporarily retain a receptacle 500. The receptacle 500 is suitable for retaining a liquid or gel-like sample medium with particles to be patterned. To this end the receptacle is provided with one or more chambers with a flat base 501 surrounded by a wall 502 delimiting the chamber. The receptacle may for example be a standard laboratory receptacle for biological material or tissue. In the example shown in Figure 1A the receptacle is a Petri dish 500 which has only one sample chamber 501 and a lid 502.

The holding means 40 of the movable assembly shown in Figure 1A comprises a circular aperture 45 which is dimensioned to accommodate a standard sized Petri dish 500. The aperture is delimited by a sidewall 41. A stop member 52, in this case a ledge, projects inwardly towards the central axis at the lower portion of the sidewall when the device is in its operational position. The position of the Petri dish is secured by the side wall 52, preventing its lateral displacement, and by the stop member 52, preventing the Petri dish from falling through the aperture 45.

The holding means 40 is however not limited to the example described above and shown in Figure 1A. The holding means 40 may take different shapes and dimensions to accommodate a sample receptacle, for example a multi well cell culture plate. Rather than inserting the receptacle into an aperture of the movable cover member 20, the receptacle 500 may be placed on the top surface 24 of the movable cover member with the holding means 40 being adapted to temporarily retain the receptacle in a fixed position on the cover plate.

"Temporarily retained" or "temporarily fixed" as used herein means that the sample receptacle is retained until it is actively released from the holding means. The holding means 40 secures the sample receptacle in its position during the patterning process.

The holding means 40 may further be provided with retaining means 43, Such retaining means may be mechanical means such as clamps or snap fits, or magnetic means. The retaining means 43 are adapted to temporarily fix the sample receptacle in its position on the movable assembly.

In the embodiment shown in Figure 1B, the stationary ferromagnetic component 14 comprises a cylindrical magnet member 14a located inside the windings of the coil 13, and a hollow cylindrical member 14b which surrounds the cylindrical magnet member 14a. The cylindrical magnet member 14a and the hollow cylindrical member 14b are rigidly connected.

The stationary ferromagnetic component 14 is fixedly attached to the support member 19 through attachment means 91.

The movable assembly 13, 20 has three degrees of rotational freedom relative to the stationary assembly 14, 19 and a translational freedom along the longitudinal Z axis of the pattern generating device. The motion in of the movable assembly is driven by the three voice coil motors 10a, 10b, 10c.

When an electric current passes through the coil 13 of a voice coil motor 10a, 10b, 10c, a magnetic field is generated which drives the linear motion of the coil 13 in relation to the ferromagnetic component 14. Since the ferromagnetic component 14 remains stationary, it is the coil 13 together with the movable assembly which moves in Z direction when the voltage of the current applied to the motor is altered. An increase of voltage actuates an upwards movement of the coil 13, while a decrease in voltage results in a downwards movement of the coil 13.

To induce vibration of a sample receptacle 500 held by the holding means 40 of the movable assembly 13, 20, an AC current, preferably a sinusoidal signal, of a desired frequency is applied to the coil 13. The AC signal causes the coil 13 to oscillate in relation to the stationary ferromagnetic component 14. This oscillation is directly transmitted to the receptacle through the movable cover member 20, thereby causing the vibration of the receptacle and inducing wave formation in a liquid or gel-like sample medium contained therein.

To induce a stable wave pattern, the oscillations of the three voice coil motors 10a, 10b, 10c must be synchronised. This means that the AC signals applied to the three motors must have the same frequency, must be in phase and must have the same amplitude. The vibrating actuation of all three voice coil motors 10a, 10b, 10c enacted on the cover member 20 is thus synchronous and drives a uniform vibrational motion of the movable cover member 20. This vibration induces a standing wave pattern in the liquid or gel-like medium which in turn guides the particles contained therein to distinct positions according to the wave pattern.

To change the position of the entire movable assembly holding the receptacle in Z direction the actuation of the voice coil motors 10a, 10b, 10c must also be synchronised. For this purpose, the same DC current is applied to all three of the voice coil motors 10a, 10b, 10c. For example, starting from the resting position, in which no current passes through the coils 13 of the voice coil motors 10a, 10b, 10c, 1V of a DC current may be applied to drive the movable component, i.e. the coil 13, upwards in Z direction into a first stable position. As long as the voltage remains constant, the movable assembly will remain fixed in said first stable position.

If in a subsequent step the voltage of the DC current passing through all three voice coil 13 is then altered by the same amount, the movable assembly 13, 20 will move from the first stable position into a second stable position. This second stable position will again be maintained for as long as the voltage remains constant. To move the movable assembly upwards along the Z direction, the voltage is increased. To lower the movable assembly along the Z direction, the voltage is decreased.

An alteration of the voltage applied to the voice coil motors 10a, 10b, 10c therefore causes a relative motion of the movable assembly 13, 20 in relation to the stationary assembly 14, 19.

As this translational displacement is actuated by changes in electrical current, this adjustment can be regulated with high precision. It is therefore particularly useful for operations which require a precise positioning of the sample receptacle. One of such applications is microscopic observation of the sample contained in the receptacle. The liquid or gel-like medium in the receptacle has a certain depth. The adjustment of the position of the sample medium in Z direction allows for moving the focal point of a microscope through the depth of the sample. Different levels or zones of the sample can thus be microscopically observed.

The patterning device of this invention with its voice coil motor driven adjustment of the position of the sample receptacle in Z direction may be applied as a microscope stage, in particular a Z microscope stage. It may also be an integrated component of a microscope stage. It may for example be used in brightfield, darkfield, phase contrast, polarized, or fluorescence microscopy.

The sample may be illuminated from the top or from beneath with light passing through the sample. In order to permit light to pass through the sample, it is clear that any components positioned in the optical path must be transparent or translucent.

The embodiment shown in Figures 1A and 1B comprises a passage 51 through its central portion, through which light may pass. The passage provides this an optical path for microscopic applications. A sample receptacle placed in of on the movable assembly thus should have a transparent or translucent base place such as to reduce interference of the base of the receptacle with the light passing through the passage.

Since each of the coils 13 of the three voice coil motors 10a, 10b, 10c is fixed to a different portion of the movable cover member 20, a difference in voltage applied to the different voice coil motors leads to a difference in the distance of translational displacement of these portions. This difference in relative displacement between the different portions of the movable assembly 13, 20 causes the movable cover member 20, respectively the holding means 40, to tilt in relation to the stationary assembly 14, 19.

Each coil and cylindrical magnet member are arranged coaxially. In order to avoid inhomogeneous Z translation of the voice coil motors, the coils 13 need to be stable and not tiltable. The voice coils 13 are therefore guided in the gap G between the cylindrical magnet member 14a and the hollow cylinder member 14b of the stationary ferromagnetic component. The gap G may be wider than the width W of the wires of the coil 13, allowing for some play or clearance between he wires of the coil and the delimiting surfaces of the gap G.

To facilitate a tilting motion of the holding means 40, the movable assembly 20 provides for a limited flexibility between the holding means 40 and the coils 13 which move only in Z direction. This flexibility may for example be provided by connecting joints (not shown) which allow for a tilt of the holding means 40 in relation to the coils 13. The holding means 40 can thus perform a limited tilting movement, such that the central axis of the holding means 40 is inclined in relation to the Z axes of the coils.

To avoid that air gets trapped in the gap when the coil performs a translational movement in the gap G, the ferromagnetic component 14 may be provided with aeration apertures, for example apertures extending through the walls of the hollow cylindrical member 14b of the assembly (not shown).

By regulating the electrical current flowing through each of the coils, the spatial orientation of the cover member 20, and consequently the spatial orientation of the sample receptacle 500 held in or on the cover member 20, can be controlled by regulating the voltage applied to the voice coil motors. The three voice coil motors 10a, 10b, 10c can thus be used for fine tuning the levelling of the sample receptacle. Since this control is regulated by adjusting the electrical current, the spatial orientation can be adjusted with high precision.

The arrangement of the three voice coil motors 10a, 10b, 10c which are positioned in a circle with a 120° angle between neighbouring voice coil motors, is ideal for these micro-levelling adjustments.

Micro-levelling as used herein refers to levelling of the sample in the receptacle based on the tilting motion achieved with the electromagnetic actuation described above. The micro levelling can be dynamically adjusted during the patterning process.

In contrast to this, the term macro-levelling refers to a preorientation of the pattern generating device 100, 200 and/or the holding means 40 which is not driven by the electromagnetic tilting mechanism described above. The macro-levelling cannot be performed during the patterning process. Generally, it is used for larger tilting adjustments, which cannot be achieved with micro-leveling corrections.

This fine-tuning mechanism is particularly useful to adjust the spatial orientation of the sample receptacle 500. Advantageously, this adjustment can be performed during the patterning of the sample without interfering with the process itself. The perpendicular orientation of the sample receptacle 500 in relation to the direction of gravity can thus be maintained, even if the stationary assembly is tilted or shaken. This adjustment thus serves to level the liquid or gel-like sample contained in the receptacle 500 to maintain a uniform depth throughout the sample.

The micro-levelling adjustment through the voice coil motors 10a, 10b, 10c may be fully automated.

It may be performed in real time to compensate for tilting or shaking of the stationary assembly of the device. The adjustment may for example be induced upon receipt of a signal from a motion sensor, for example a gyroscopic sensor, which measures the spatial orientation or change in spatial orientation of the movable assembly and/or the stationary assembly. The signal may be received and processed in an integrated processor or by an external processor. The electric current applied to one or more of the voice coil motors 10, 10a, 10b, 10c may then be adjusted according to the sensor signal received.

One or more motion sensors, for example a gyroscopic sensor, may be integrated in the pattern generating device to determine the spatial orientation of the movable assembly and/or the stationary assembly in relation to each other or in relation to the gravitational force.

The micro-levelling mechanism may continuously correct the spatial orientation of the sample receptacle 500 during operation, thereby improving the quality and reproducibility of the patterning.

The pattern generating device may be equipped with a macro-levelling mechanism. This mechanism may for example be provided in addition to the micro-levelling mechanism. The macro-levelling mechanism serves a first general adjustment of spatial orientation of the movable assembly. Different from the micro-levelling mechanism actuated by the plurality of voice coil motors, the macro-levelling mechanism serves a less granular and larger adjustment, which may be required, if the device is positioned on an uneven or sloping surface for example. The macro-levelling mechanism is not suited for fine-tuning, nor is it intended real-time adjustment.

In the embodiment shown in Figures 1A and 1B the macro-levelling mechanism is enabled by joining means 31 which adjustably attach the support member 19 of the stationary assembly to a base body 30, which rests on the ground, respectively an external support. The adjustable joining means 31 are preferably equally spaced along a peripheral portion of the support member 19. The adjustable joining means serve to locally alter the distance d between the support member 19 and the base body 30. Preferably at least two, for example three regularly spaced adjustable joining means 31 are provided. By adjusting the local distances in the different peripheral portions regulated by the adjustable joining means, the support member 19 can be tilted in relation to the base body 30.

In the embodiment shown in Figures 1A and 1B the adjustable joining means 31 are round-head screws which can be tightened against the force of a helical spring, which each urge the support member 19 away from the base body 30. The embodiment shown in these Figures comprises three adjustment members arranged at an angle of 120° to one another along the periphery of the support member 19. Only one adjustable joining means 31 is visible in Figure 1A.

Adjustable joining means are however not limited to this particular embodiment and may take other suitable forms.

Macro-levelling may also be achieved by integrating a gyroscope into the pattern generating device. An example for an integrated gyroscope is provided in a second embodiment of this invention, which is depicted in Figures 2A to 2D. A gyroscope of this kind, with the gimbals arranged around the set of voice coil motors 10a,10b, 10c, could also be used for macro-levelling of the movable assembly 13, 20 of this embodiment.

In the embodiment shown in Figures 1A and 1B, the movable assembly comprising the coil 13 and the cover member 20 are linked to the stationary assembly comprising the support member 19 and the ferromagnetic component 14 of the voice coil motors through flexible members 21a, 21b. These flexible members 21a, 21b, are adapted to guide the three voice-coil in z-direction, dampen unintended motion, or noise, such as torsional vibration and/or vertical motion induced by environmental factors or impacts. The flexible members are an upper lamella 21a and a lower lamella 21b each having a first end fixed to a lamella support member 18 which forms part of the stationary assembly. The lamella support member 18 is fixed unto the support member 19 of the stationary assembly. The opposed second end of the lamellas 21a, 21b are fixed to the movable cover member 20. In the example shown the second end of the lamella are fixed to the cover member 20 by means of attachment means 28 which are a plates that are screwed unto the cover member 20. One upper and one lower lamella 21a, 21b form a set, the embodiment shown in Figures 1A and 1b comprises three sets of lamellae 21a, 21b. Each of the three sets is arranged between two voice coil motors 10a, 10b, 10c, such that the sets of lamellae are spaced at equal distances to one another around the central portion 50 of the device.

The lamellae have limited flexibility. Two lamellae arranged in a set jointly act as guide the three voice-coil in z-direction, dampers, providing resistance to translational movement in Z direction and to vibrational torsion. This damping effect of the set of lamellae compensates for undesired environmental impacts interfering with the motions actuated by the voice coil motors.

Figures 2A to 2D illustrate a second embodiment 200 of this invention which shares the same advantages of the first embodiment 100, in that it induces vibration in a liquid or gel-like medium in a sample receptacle 600 held by the movable assembly of the device by means of a voice coil motor 10, and in that it enables translational displacement of the sample receptacle along the Z axis of the device. It is thus also particularly suited for integrating the patterning process with another process requiring precise and stable positioning of the sample receptacle 600 along the Z axis, such as microscopic observation.

Different from the first embodiment the pattern generating device 200 shown in Figures 2A to 2D only comprises one solenoid motor 10 which is positioned centrally in the device. The device shown here has an overall conical shape. The shape of this device is however not particularly limited. The device may also take an overall rectangular or square shape.

The moveable assembly of this embodiment comprises the coil 13 of the voice coil motor 10 and a receptacle support 15 which functions as a holding means for the sample receptacle. The holding means 15 may hold a sample receptacle disposed thereon in position by mechanical or magnetic means.

In the embodiment shown in Figure 2C, the sample receptacle 600 is magnetically attached to the receptacle support 15. For this purpose, one or more magnets 151 are provided in the receptacle support 15 couple magnetically with one or more ferromagnetic members 601 of the sample receptacle 600. Together the magnets 15 and ferromagnetic members 601 cooperate to operatively couple the sample receptacle to the support member 15 in a fixed and robust manner, such that the connection is not loosened when exposed to vibrations, in particular vibrations in the preferred frequency range for patterning. The magnetic interface thus ensures that the sample receptable 600 is firmly attached to receptacle support 15 during the vibration induced patterning process. After patterning the receptacle can be manually removed from the receptacle support 15.

One of the advantages of magnetic coupling the receptacle 600 to the receptacle support 15 is that a sheet may be placed between the receptacle and the receptacle support, to provide a barrier, for example a sterile barrier between the receptable and the pattern generating device. By introducing this barrier the risk of contamination of the sample in the receptacle can be significantly reduced.

The stationary assembly of the embodiment illustrated in Figures 2A to 2D comprises a stationary ferromagnetic component 14 of the voice coil motor 10. The ferromagnetic component 14 is shaped like in the first embodiment of the device, described above. It has a cylindrical magnet member 14a and a hollow cylindrical member 14b. The coil 13 is accommodated in the gap G between the cylindrical magnet member 14a and the walls of the hollow cylindrical member 14b surrounding the cylindrical magnet member 14a. The stationary ferromagnetic component 14 is fixed to a support member 19.

Different from the first embodiment described above, this embodiment does not comprise a micro-levelling mechanism. Advantageously, the clearance between the coil and the delimiting walls of the gap G avoid or reduces friction and therefore to enable a smooth translational displacement of the coil 13.

In analogy to the first embodiment, the translation in Z direction of the movable assembly 13, 15 in relation to the stationary assembly 14, 19 is driven by passing an electrical current through the coil 3.

An alteration in voltage of DC current passing through the coil 13 results in a translational displacement along the Z axis of the movable assembly 13, 15.

An AC signal passing through the coil 13 results in an oscillation of the coil, which causes a receptacle held by the movable assembly to vibrate such that a wave is generated in the sample liquid or gel-like medium contained in the receptacle 600. The frequency of the AC signal and as a result the frequency of the wave pattern can be tuned to achieve a desired patterning of the particles contained in the liquid or gel-like sample.

While this embodiment of the pattern generating device does not comprise a micro-levelling mechanism, it contains a gyroscopic macro-levelling mechanism, which automatically adjusts the spatial orientation of the support member 15 in relation to the gravitational force, such that the sample receptacle held by the support member 15 remains perpendicular to the direction of gravity.

The gyroscope 60 is integrated into the structure of the pattern generating device. It forms part of the stationary assembly of the device. It comprises a first gimbal 61, also referred to as the inner gimbal, and second gimbal 62, also referred to as an outer gimbal. The gimbals are arranged around the voice coil motor 10. The support member 15 extends upwardly through the centre of the inner gimbal 61.

The outer gimbal 62 pivots about a first axis defined by pivot members 63a and 63b, which provide the connection between the outer gimbal 62 and a support ring member 16 of the stationary assembly. The support ring member 16 is connected to a base body 30 through three regularly spaced dampening connector members 33a, 33b, 33c, which are regularly spaced in a circle at a 120° angles.

The inner gimbal 61 is rotationally connected to the outer gimbal through two pivot members 64a, 64b defining a second axis, about which the inner gimbal 61 pivots. The first axis and the second axis are perpendicular to one another.

To improve its performance of the gyroscope is further provided with gyroid weights 65, which are fixed to the support member 19 of the stationary assembly 13, 15 for lowering the gravimetric centre point as low as possible. The gyroid 60 therefore forms a fully integrated part of the stationary assembly.

Damping elements 70a, 70b may provide the connection between the gyroscope 60 and the stationary assembly of this embodiment. In analogy to the dampers described for the first embodiment 21a, 21b, these dampers may also be formed of an upper lamella 70a and a lower lamella 70b.

The stationary assembly, which is connected to the base body 30 through the dampening connector members 33a, 33b, 33c, has three rotational freedoms in relation to the base body 30. The gyroscope 60 of the stationary assembly serves to adjust the spatial orientation of the stationary assembly in relation to the base body 30. The gyroscope ensures that the sample receptacle 600 held by the receptable support 15 takes a perpendicular orientation in relation to the gravitational force.

The base body 30 preferably comprises dampening support members 35 on which the weight of the base body rests when the device is positioned on a support. The dampening support members 35, for example damper isolation feet, serve to suppress the transmission of the vibrations generated by the device to the external support and vice versa. In Figure 1A of the first embodiment, the dampening support members 35 are arranged in the recesses at the bottom surface of the base plate and therefore not visible. An arrow indicates a recess in which at least one to the dampening support members 35 is placed.

The combination of the dampening support members 35 and the flexible members 21a, 21b, or 70a, 70b provides for optimal damping. In the first embodiment shown in Figures 1A and 1B a high-amplitude vibration with an acceleration of 100m/s² of the receptacle could be reduced to a low amplitude vibration with an acceleration of 3m/s² of the support onto which the pattern generating device was placed. This highly efficient dampening was achieved through the combination of flexible members 21a, 21b, the dampening mass of the base body 30 and the dampening support members 35 fixed to the base support 30. Similar results were obtained for the second embodiment (Figures 2A to 2D), through the combination of the flexible elements 70a, 70b, the dampening connector members 33a, 33b, 33c, and the dampening support members 35 fixed to the base support 30.

The pattern generating device of this invention 100, 200 may comprise an external casing 85 (shown in Figure 2D), which provides protection from environmental contamination and impacts to the components housed therein. The casing 85 may take an overall conical shape, matching the geometry of the stationary and movable assemblies. The casing 85 is however not limited to this shape.

An example for voltages applied for Z actuation during the patterning process is illustrated in the voltage (U) over time (t) graph in Figure 3. A first DC bias voltage (DC1) is initially applied to drive the electromagnetic motor and to move the movable assembly into a first stable position P1. A sinusoidal AC signal is superposed onto the DC voltage to cause the vibration of the movable assembly.

To move the movable assembly upwards along the Z axis, the initial DC voltage DC1 is increased to a higher DC2 bias voltage. This event is shown at a time t₁ in Figure 3. The AC signal continues to be applied during the increase in bias voltage and thereafter. The movable assembly is not in a second stable position P2 and continues to vibrate. Wave formation in the medium of the sample receptacle held by the movable assembly is therefore maintained, and the vibration-induced patterning process continues without interruption in both the first position P1 and the second position P2.

### Reference numbers used in the figures

- 10: electromagnetic Z actuator
- 10a, 10b, 10c: first, second and third electromagnetic Z actuator
- 13: coil
- 14: ferromagnetic component
- 14a: cylindrical magnet member of the ferromagnetic component
- 14b: hollow cylindrical member of ferromagnetic component
- 15: receptacle support
- 16: support ring member
- 19: support member
- 20: movable cover member
- 21a: upper flexible member of damper of embodiment 1
- 21b: lower flexible member of damper of embodiment 1
- 23: button surface of movable cover member
- 24: top surface of movable cover member
- 30: base body
- 31: adjustable joining means 31 connecting the base body 30 to the support member 19 of embodiment 1
- 32: attachment means fixing the coils 13 to the movable cover member 20 of embodiment 1
- 33: dampening connector members
- 35: dampening support members
- 40: holding means
- 41: side wall of holding means
- 42: stop member of holding means
- 43: retaining means of the holding means
- 45: central aperture in movable cover member
- 50: central portion of the pattern generating device
- 60: integrated gyroscope
- 61: first gimbal, inner gimbal
- 62: second gimbal, outer gimbal
- 63a, 63b: pivot members defining first rotational axis
- 64a, 64b: pivot members defining second rotational axis
- 65: weights
- 71a: upper flexible member of damper of embodiment 2
- 71b: lower flexible member of damper of embodiment 2
- 80: electrical wires
- 85: casing of the pattern generating device
- 91: attachment means fixing the ferromagnetic component 14 of the voice coil motor to the support member 19.
- 100: first embodiment of the pattern generating device
- 200: second embodiment of the pattern generating device
- 500: sample receptacle with a transparent or translucent base
- 600: sample receptacle comprising ferromagnetic members
- 601: ferromagnetic member
- d: d
- W: width of the wire of the coil
- G: gap

## Claims

1. A pattern generating device comprising
- a movable assembly comprising one or more coil (13) and a holding means adapted to hold a sample receptacle (500, 600), and
- a stationary assembly comprising one or more ferromagnetic component (14), each ferromagnetic component (14) having a cylindrical magnet member (14a) being at least partially placed inside one of the one or more coil (13),
wherein each set of a coil (13) and ferromagnetic component (14) together form an electromagnetic Z actuator (10, 10a, 10b, 10c),
wherein the one or more electromagnetic Z actuator (10, 10a, 10b, 10c) is configured to actuate a translational displacement of the movable assembly from a first to a second stable position and vice versa in Z direction relative to the stationary assembly, and
wherein the one or more electromagnetic Z actuator (10, 10a, 10b, 10c) is configured to induce a vibration of a sample receptacle (500, 600) held by the holding means (40, 151).

2. The pattern generating device of claim 1, wherein the electromagnetic Z actuator is a linear motor, a voice coil motor, a linear solenoid motor, or a vibration-motor.

3. The pattern generating device of claim 1 or 2, wherein the pattern generating device (100, 200) is adapted for use as a microscope stage or for integration in a microscope stage.

4. The pattern generating device of any of claims 1 to 3, wherein the one or more electromagnetic Z actuator (10, 10a, 10b, 10c) is configured to actuate a translational displacement of the movable assembly in Z direction when a DC bias voltage passes through the coil (13), and wherein the one or more electromagnetic Z actuator (10, 10a, 10b, 10c) is configured to induce vibration of a sample receptacle held by the holding means (40, 151) when an AC current flows through the coil (13), said AC current preferably having a frequency in the range of 20 Hz to 20 kHz, or 20Hz to 1kHz, or 50Hz to 2kHz, or 10kHz to 15kHz.

5. The pattern generating device of any of claims 1 to 4, wherein at least two, for example three, individual electromagnetic Z actuators (10a, 10b, 10c) are configured to actuate translational displacement of the movable assembly (13, 20) along its Z direction and/or to adjust of the spatial orientation of the movable assembly (13, 20).

6. The pattern generating device of any of claims 1 to 5, wherein at least two electromagnetic Z actuators (10a, 10b, 10c) are arranged regularly spaced in a circle around a central portion (50) of the pattern generating device (100), and wherein the holding means (40, 151) is arranged in the central longitudinal axis of the pattern generating device (100).

7. The pattern generating device of claim 5 or 6, wherein the movable assembly (13, 20) with the holding means, or only the holding means (40, 151) has three degrees of rotational freedoms in relation to the stationary assembly (14, 19) and wherein the at least two electromagnetic Z actuators (10a, 10b, 10c) are configured to adjust the spatial orientation of the movable assembly (13, 20) with the holding means, or only the holding means (40, 151) in relation to the stationary assembly (14, 19).

8. The pattern generating device of any of claims 5 to 7, wherein the at least two electromagnetic Z actuators (10a, 10b, 10c) are configured to automatically adjust the spatial orientation of the movable assembly (13, 20) with the holding means, or only the holding means (40, 151) such that it is substantially perpendicular to the direction of gravity.

9. The pattern generating device of any of claims 5 to 8, further comprising a motion sensor, for example a gyroscopic sensor, for determining the spatial orientation of the stationary assembly (14, 19), the movable assembly (13, 20) and/or the holding means (40, 151) in relation to the direction of gravity.

10. The pattern generating device of claim 5 to 9, wherein at least a central portion of the movable assembly is transparent or translucent, or comprises an aperture (45) such as to allow incident light to pass through the central portion along the Z axis of the movable assembly.

11. The pattern generating device of any of claims 1 to 4, wherein one electromagnetic Z actuator (10) is positioned in the longitudinal central axis of the pattern generating device (200).

12. The pattern generating device of any of claims 1 to 11 further comprising a gyroscope (60) for measuring, maintaining and/or adjusting the spatial orientation of the movable assembly (13, 15) and the stationary assembly (14, 19) in relation to a base body (30).

13. The pattern generating device of any of claims 1 to 12, provided with a controller is configured to control
- the Z actuation of the one or more electromagnetic Z actuator (10, 10a, 10b, 10c) using a DC bias voltage, and/or
- the vibration of a sample receptacle (500, 600) held by the holding means (40) by causing an AC signal to pass through the coil (13) of the electromagnetic Z actuator (10), if the device only comprises one electromagnetic Z actuator, or by causing synchronised AC signals to pass through a plurality of electromagnetic Z actuators (10a, 10b, 10c), if the device comprises a plurality of electromagnetic Z actuators, such that said electromagnetic Z actuators (10a, 10b, 10c) jointly induce a defined vibration of the sample receptacle (500).

14. A microscope comprising a microscope stage which is, or which comprises a pattering device according to any of claims 1 to 13.

15. A method for patterning particles in a liquid or gel-like sample, comprising
- providing a pattern generating device (100, 200) with holding means comprising one or more electromagnetic Z actuator (10, 10a, 10b, 10c), a movable assembly with a holding means (40, 151) adapted to hold a sample receptacle and with a coil (13) of said one or more electromagnetic Z actuator (10, 10a, 10b, 10c), and a stationary assembly comprising a ferromagnetic component (14) of said one or more electromagnetic Z actuator (10, 10a, 10b, 10c),
- accommodating a sample receptacle (500, 600) having at least one chamber with a flat base in the holding means (40, 151), said at least one chamber being provided with a liquid or gel-like sample containing particles,
- applying a DC bias voltage to drive at least one of the one or more electromagnetic Z actuator (10, 10a, 10b, 10c) of the pattern generating device (100, 200), thereby actuating a translational displacement of at least a portion of the movable assembly from a first to a second stable position in Z direction relative to the stationary assembly, and
- applying an AC signal to drive the one or more electromagnetic Z actuators (10, 10a, 10b, 10c) to induce vibration of the liquid or gel-like sample, which is contained in the sample receptacle (500, 600) accommodated in the movable assembly of the pattern generating device (100, 200), thereby inducing a wave pattern in said liquid or gel-like sample and causing the particles contained therein to migrate and to take a position according to said wave pattern.
